# FASCICULE DE BREVET EUROPEEN

(11) **EP 0 511 286 B1**
(45) Date de publication et mention de la délivrance du brevet: **22.09.1999**
(21) Numéro de dépôt: 91903126.0
(22) Date de dépôt: 18.01.1991
(51) Int. Cl.: C04B 2/04

(54) **PROCEDE D'EXTINCTION DE LA CHAUX VIVE CONTENUE DANS LES CENDRES**
VERFAHREN ZUM LÖSCHEN VON BRANNTKALK ENTHALTENDEN ASCHEN
PROCESS FOR THE SLAKING OF QUICK LIME CONTAINED IN ASHES

(30) Priorité: 19.01.1990 FR 9000635
(43) Date de publication de la demande: 04.11.1992
(73) Titulaire: CHARBONNAGES DE FRANCE, 92507 Rueil-Malmaison Cédex (FR)
(72) Inventeur: BLONDIN, Jacques, F-59553 Cuincy (FR); BAALBAKI, Oussama Cité Scientifique, F-59650 Villeneuve-d'Ascq (FR)
(74) Mandataire: Santarelli, Marc
(86) Numéro de dépôt international: FR9100027
(87) Numéro de publication internationale: WO9110628

(56) Documents cités:
- BE-A- 327 417
- FR-A- 2 501 669
- Chemical Abstracts, vol. 100, 1984, (Columbus, Ohio, US), B.A. Shikhov et al.: "Two-step treatment of lime with water in the production of higly dispersed calcium hydroxide", voir page 109
- Chemisches Zentralblatt, no. 13,1960, E. Pischunger et al.: "Das Löschen von Kalk mit NaC1- und CaCI2-Lösungen", voir page 4319 & Przemysl chem. 38. 97-99- February 1959. Torun, Uniw. M. Kopernika, Kat. Techn. Chem.

## Description

Les cendres volantes de centrales électriques se classent en deux catégories principales. Les cendres silico-alumineuses qui ont des propriétés pouzzolaniques et sont employées dans les bétons et les mortiers. Les cendres sulfo-calciques qui ont des propriétés pouzzolaniques et hydrauliques et qui pourraient être plus largement employées comme liant hydraulique dans les bétons et les mortiers. Cette seconde catégorie est notamment un sous-produit résultant de la combustion d'un mélange en proportion variable de charbon et de lignite sous forme pulvérisée dans les centrales électriques. Ces cendres volantes comportent une proportion importante de composés du calcium, pour partie initialement présente dans le produit de combustion et pour partie, additionnée aux sous-produits de combustion lors du traitement de désulfuration des fumées, d'où leur appellation de sulfo-calcique.

La chaux vive, parfois en forte teneur parmi les composés du calcium, confère aux mortiers ou aux bétons constitués pour partie de ces cendres une tendance indésirable au gonflement qui limite leurs possibilités d'emploi. Il est connu qu'il convient d'éteindre cette chaux vive sans pour autant altérer le potentiel hydraulique et pouzzolanique des autres constituants des cendres.

Le gonflement de la chaux vive au moment de son hydratation résulte du phénomène appelé foisonnement de la chaux qui donne à la chaux éteinte un volume apparent supérieur au double du volume de la chaux vive. Comme par ailleurs l'hydratation de la chaux vive s'opère, dans les cendres volantes, très lentement, les phénomènes de gonflement peuvent apparaître plusieurs semaines ou plusieurs mois après le coulage du béton contenant des cendres brutes non préalablement traitées.

Pour certaines cendres (par exemple de lit fluidisé) dont la chaux vive s'éteindrait à l'eau avec des phénomènes de prise, il peut être également utile d'éteindre cette chaux vive avant utilisation pour éviter, entre autres, le dégagement de chaleur correspondant à l'extinction lors de la mise en oeuvre.

L'extinction de la chaux vive dans les cendres qui la contiennent est une opération délicate. En effet, l'eau apportée aux cendres brutes ne doit pas provoquer l'hydratation des silicates et des aluminates calciques qui confèrent aux cendres des propriétés pouzzolaniques. Par ailleurs la chaux vive, présente dans les cendres volantes issues de la combustion du combustible, s'hydrate très lentement, du fait semble-t-il, de la présence des silicates et des aluminates qui, se combinant avec la chaux éteinte en premier lieu, ralentirait l'hydratation à coeur des grains de chaux vive. On comprend donc que l'extinction des cendres doit satisfaire deux conditions contradictoires : hydrater le mélange suffisamment longtemps pour éteindre toute la chaux vive et en même temps cesser l'effet de cette hydratation avant destruction des propriétés hydrauliques et pouzzolaniques du mélange.

Des solutions à cette contradiction sont révélées par le document FR-A- 2 501 669. On sait en effet qu'une hydratation au-dessus de 120°C n'altère pas les propriétés hydrauliques des silicates et des aluminates présents dans les cendres. Il a donc été proposé de procéder à l'extinction des cendres à cette température et sous pression pour disposer d'eau en phase liquide, la chaux vive n'ayant pas d'affinité pour la vapeur dans le cas où les cendres sont trop chaudes pour provoquer une condensation de cette vapeur. Le procédé proposé dans le document FR-A-2 501 669 présente cependant un certain nombre d'inconvénients par le fait qu'il implique le réchauffage préalable des cendres et qu'il exige une enceinte de réaction avec une injection d'eau surchauffée d'hydratation à une température supérieure à 130°C, qui ne doit pas se vaporiser avant d'avoir réagi avec les cendres, et un dispositif d'agitation des cendres pour assurer un mélange intime avec l'eau surchauffée.

La présente invention entend proposer une alternative plus économique à ce procédé de traitement permettant de traiter des cendres à la température ordinaire dans une première phase du procédé puis, en procédant à une seconde phase de traitement en température et sous pression, à parfaire l'hydratation de la chaux tout en inhibant les réactions pouvant conduite à la perte du potentiel hydraulique du mélange.

A cet effet, l'invention a donc pour objet un procédé d'extinction de la chaux vive contenue dans des cendres volantes contenant des éléments ayant des propriétés hydrauliques ou pouzzolaniques, caractérisé comme indiqué dans la revendication 1.

Des deux phases peuvent, au choix, être effectuées dans le même récipient. Il est important dans ce cas de s'assurer d'une préhydratation complète (objet de la première phase) avant le début de la vaporisation (conséquence de la seconde phase).

Ainsi, contrairement à l'état de la technique, l'invention propose une première étape, dans le procédé d'extinction, consistant en une préhydratation des cendres à l'eau froide dont on a constaté qu'elle augmente l'efficacité de l'hydratation à chaud qui constitue la seconde phase du procédé. Il convient cependant de déterminer la quantité d'eau optimale à incorporer dans les cendres dans la première phase. Celle-ci doit être supérieure à celle stoechiométriquement nécessaire à l'extinction de la chaux vive présente, qui peut être calculée à partir de la connaissance de la teneur en chaux libre des cendres, éventuellement corrigée par la présence d'autres oxydes tels que l'oxyde de magnésium.

Au-dessus donc de cette limite inférieure, il a été procédé à des essais sur le produit final au moyen des tests définis par la norme française P 15-432 "Essais d'Expansion à chaud" utilisant des moules à aiguilles dites "de Le Châtelier" pour déterminer le rôle de cette quantité initiale d'eau et son influence sur le produit final en ce qui concerne l'extinction. C'est ainsi que pour une cendre dont la quantité stoechiométriquement nécessaire à une extinction complète a été calculée égale à 8 %, une teneur de l'ordre de 20 % (fraction du poids d'eau par rapport au poids de cendre) a été trouvée optimale, c'est-à-dire correspondant à un écartement minimum des aiguilles de Le Châtelier.

Cette fraction correspond d'ailleurs à une zone de transition du point de vue de la consistance du mélange de la cendre testée préhydratée à froid. En deçà de cette teneur, le mélange possède une consistance sableuse qui peut ou non se traduire par une prise en masse temporaire généralement accompagnée d'un foisonnement.

Au-dessus de cette valeur, le mélange est pâteux, la prise a lieu avec un gonflement suivi à plus ou moins longue échéance d'une diminution des résistances mécaniques et éventuellement d'un retour à une consistance pulvérulente.

Cette quantité détermine la possibilité ou non de procéder à un stockage intermédiaire entre les deux phases du procédé, puisqu'elle conditionne le temps de début de prise en masse du mélange. Il faudra prendre des précautions en ce qui concerne les conditions de stockage pour limiter les risques de réduction des propriétés pouzzolaniques et tenir compte également de l'auto-consommation de la chaux libre présente dans le mélange qui risque de réduire l'hydraulicité de la cendre éteinte.

Il peut être avantageux, dans cette première phase dite de préhydratation d'ajouter un accélérateur de prise. Une quantité préférée de chlorure de calcium est d'environ 2 % en poids de cendres, observée également après réalisations d'éprouvettes expérimentales soumises au test ci-dessus rappelé: toutes choses égales par ailleurs, c'est avec cette quantité d'additif que l'on a constaté une expansion à chaud minimale . L'introduction de chlorure de calcium demande une nouvelle détermination de la teneur optimale d'eau de préhydratation. Il conviendra cependant de prendre en compte la destination finale des cendres ainsi traitées car le chlore peut être contre-indiqué dans le béton à réaliser.

On tiendra compte dans la mise en oeuvre du procédé, avec ou sans additif dans l'eau de préhydratation, d'une forte réaction exothermique accompagnée d'un foisonnement important et d'un dégagement de vapeur dans les heures qui suivent la première phase.

Pour ce qui concerne la seconde phase du procédé selon l'invention, on a déterminé tout d'abord la plage de température 130°C - 250°C pour les raisons suivantes :
- par des études qui ont montré qu'au dessous de 120°C les aluminates et les silicates risquent d'être attaqués par l'eau en excès et que les cendres risquent de perdre leur potentiel pouzzolanique ;
- par la limite théorique supérieure de 400°C au-dessus de laquelle la chaux libre se décompose en chaux vive et en eau;
- par le constat, avec la cendre testée, que l'extinction de la chaux vive obtenue le plus rapidement l'a été pour une température de 220°C dans la cendre.

Cette seconde phase peut s'opérer en présence de vapeur d'eau à pression atmosphérique ou sous une pression supérieure (par exemple entre 1 et 25 bars). La pression de vapeur générée par l'eau en excès peut être augmentée par une injection complémentaire de vapeur avant ou après le point d'équilibre de pression observé sans autre apport que de l'eau d'hydratation.

Au cours de cette seconde phase, les cendres perdent l'eau apportée lors de la première phase de préhydratation à froid et non utilisée pour l'extinction. L'eau qui pourrait être introduite dans les cendres au cours de la seconde phase par condensation ou ruissellement a un effet néfaste sur le produit final dans la mesure où elle crée des agglomérats qui restent humides. Il convient donc de prévoir, dans le matériel d'exploitation, des dispositifs propres à assurer le réglage de la pression ainsi que les dispositifs propres à éviter le ruissellement des condensats dans les cendres, voire à éviter leur formation. A cet égard une double enveloppe chauffée peut être préférable à un simple calorifuge.

La pression de service sera un paramètre important de l'installation qui sera mise en oeuvre pour appliquer ce procédé. Son choix résultera d'un compromis économique entre le coût d'investissement (enceinte pressurisée et générateur de vapeur) et la durée du cycle d'extinction pendant cette seconde phase, pour un degré d'extinction choisi au préalable. Sur la cendre testée, il a été observé un même écartement des aiguilles de Le Châtelier à chaud sur pâte pure inférieur à 3mm avec une réduction de 16 à 1h de la durée de la seconde phase entre un premier réglage à pression atmosphérique de vapeur surchauffée à 130°C et un second réglage de pression de vapeur saturée à 5 bars.

Dans le procédé selon l'invention, cette seconde phase de traitement peut s'opérer sans agitation de la cendre, mais elle reste conseillée pour des questions d'homogénéité et de vaporisation de l'eau en excès. On assiste à un foisonnement important dont il faut tenir compte pour déterminer la capacité et la résistance mécanique de l'enceinte de traitement et qui présente l'avantage de diviser finement les cendres sans broyage mécanique. Les cendres, à la fin du cycle de cette seconde phase, sont dans un état propre à leur transport pneumatique qui peut profiter d'une surpression établie dans l'enceinte.

Les principaux avantages du procédé selon l'invention résident en premier lieu dans la faculté de diminuer le temps d'hydratation des cendres. Cette diminution est d'une incidence importante sur les coûts de production. En outre, cette accélération n'est pas obtenue au détriment des propriétés hydrauliques des cendres éteintes.

L'humidité résiduelle des cendres est généralement inférieure à 0,5 %, ce qui garantit la non-évolution de l'hydratation au cours du stockage avant emploi. Les cendres issues du procédé sont dans un état pulvérulent facilement maniable. La préhydratation à froid avec une recherche fine de la teneur en eau nécessaire au traitement permet de conserver intégralement les propriétés pouzzolaniques des cendres.

Enfin, tant dans sa première phase que dans sa seconde, le procédé selon l'invention permet une limitation des risques de carbonatation du produit (à froid la réactivité des cendres est faible et à chaud, elles sont sous atmosphère protectrice de vapeur d'eau).

La cendre testée ainsi éteinte a été incorporée dans certains mortiers en substitution du ciment Portland et les éprouvettes ainsi réalisées, ont subi des tests de compression. On a ainsi constaté une amélioration sensible de la résistance à la compression pour une préparation dans laquelle au moins 10% de ciment ont été remplacés par la cendre volante éteinte selon le procédé de l'invention.

## Revendications

1. Procédé d'extinction de la chaux vive contenue dans des cendres volantes contenant en outre des éléments ayant des propriétés hydrauliques ou pouzzolaniques, caractérisé en ce qu'il comporte une première phase de mouillage des cendres à température ambiante avec une quantité d'eau froide supérieure à la quantité stoechiométrique d'extinction de la chaux jusqu'à l'obtention d'un mélange de consistance intermédiaire entre une consistance sableuse et une consistance pâteuse, cette première étape étant suivie, avant réduction des propriétés pouzzolaniques et hydrauliques, d'une seconde phase consistant à mettre, dans un récipient et à une température comprise entre 130°C et 250°C, le mélange de cendres mouillées sous pression de vapeur d'eau saturée ou légèrement surchauffée jusqu'à hydratation complète des cendres, et évaporation de l'eau en excès.

2. Procédé selon la revendication 1, caractérisé en ce que la quantité d'eau froide utilisée dans la première phase de mouillage est en poids égale à environ 20 % du poids des cendres lorsque la quantité stoechiométrique nécessaire à une extinction complète est estimée à 8 %.

3. Procédé selon la revendication 1 ou la revendication 2, caractérisé en ce que l'eau mise en oeuvre dans la première phase est additionnée d'au moins un accélérateur de prise.

4. Procédé selon la revendication 3, caractérisé en ce que l'accélérateur de prise comprend du chlorure de calcium.

5. Procédé selon la revendication 4, caractérisé en ce que le chlorure de calcium représente une quantité d'environ 2 % du poids des cendres.

6. Procédé selon l'une quelconque des revendications 1 à 5, caractérisé en ce que la seconde phase est réalisée sous une pression comprise entre 1 à 25 bars.

7. Procédé selon l'une quelconque des revendications 1 à 6, caractérisé en ce que les deux étapes sont effectuées dans un même récipient.

## Patentansprüche

1. Verfahren zum Löschen von in Flugaschen enthaltenem Brandkalk, die unter anderem Elemente mit hydraulischen oder Pouzzolanerde-Eigenschaften aufweisen, dadurch gekennzeichnet, daß es einen ersten Schritt des Befeuchtens der Aschen bei Umgebungstemperatur mit einer Kaltwassermenge über der stöchiometrischen Löschmenge des Kalkes bis zur Erzielung einer Mischung einer Konsistenz zwischen einer sandartigen und einer pastenartigen Konsistenz umfaßt, wobei sich an diesen ersten Schritt vor Reduktion der Pouzzolanerde- und hydraulischen Eigenschaften ein zweiter Schritt anschließt, der darin besteht, daß man in einem Behälter und bei einer Temperatur zwischen 130°C und 250°C die Mischung befeuchteter Aschen einem gesättigten oder leicht überhitzten Wasserdampfdruck bis zur vollständigen Hydratation der Aschen aussetzt und das überschüssige Wasser abdampft.

2. Verfahren nach Anspruch 1, dadurch gekennzeichnet, daß die im ersten Schritt des Befeuchtens verwendete Menge an kaltem Wasser ein Gewicht gleich etwa 20% des Gewichtes der Aschen aufweist, wenn die zum vollständigen Löschen notwendige stöchiometrische Menge auf 8% geschätzt wird.

3. Verfahren nach Anspruch 1 oder 2, dadurch gekennzeichnet, daß das im ersten Schritt verwendete Wasser mit mindestens einem Abbindebeschleuniger versetzt ist.

4. Verfahren nach Anspruch 3, dadurch gekennzeichnet, daß der Abbindebeschleuniger Calciumchlorid umfaßt.

5. Verfahren nach Anspruch 4, dadurch gekennzeichnet, daß das Calciumchlorid eine Menge von etwa 2 Gew.-% der Aschen ausmacht.

6. Verfahren nach irgendeinem der Ansprüche 1 bis 5, dadurch gekennzeichnet, daß der zweite Schritt unter einem Druck zwischen 1 und 25 bar durchgeführt wird.

7. Verfahren nach einem der Ansprüche 1 bis 6, dadurch gekennzeichnet, daß beide Schritte in demselben Gefäß durchgeführt werden.

## Claims

1. Method for slaking quicklime contained in fly ash also containing elements having hydraulic or pozzuolanic properties, characterised in that it includes a first phase of wetting the ash at ambient temperature with a quantity of cold water greater than the stoichiometric quantity for slaking of the quicklime until there is obtained a mixture with a consistency intermediate between a sandy consistency and a viscous consistency, this first step being followed, after reduction of the pozzuolanic and hydraulic properties, by a second phase consisting of putting, in a receptacle and at a temperature of between 130°C and 250°C, the mixture of wet ash under a saturated or slightly superheated steam pressure until there is complete hydration of the ash and evaporation of the excess water.

2. Method according to Claim 1, characterised in that the quantity of cold water used in the first wetting phase is equal in weight to approximately 20% of the weight of the ash when the stoichiometric quantity necessary for complete slaking is estimated at 8%.

3. Method according to Claim 1 or Claim 2, characterised in that the water used in the first phase has at least one setting admixture added to it.

4. Method according to Claim 3, characterised in that the setting admixture comprises calcium chloride.

5. Method according to Claim 4, characterised in that the calcium chloride represents a quantity of approximately 2% of the weight of the ash.

6. Method according to any one of Claims 1 to 5, characterised in that the second phase is carried out at a pressure of between 1 and 25 bar.

7. Method according to any one of Claims 1 to 6, characterised in that the two steps are carried out in the same receptacle.
